(19) Europäisches Patentamt
European Patent Office
Office européen des brevets

(11) Publication number: **0 009 757**
**B1**

(12) # EUROPEAN PATENT SPECIFICATION

(45) Date of publication of patent specification: **18.05.83**

(51) Int. Cl.³: **C 08 L 77/00**

(21) Application number: **79103636.1**

(22) Date of filing: **25.09.79**

(54) **Polyamide resins and process for preparing the same.**

(30) Priority: **25.09.78 US 945323**
**30.04.79 US 34605**

(43) Date of publication of application:
**16.04.80 Bulletin 80/8**

(45) Publication of the grant of the patent:
**18.05.83 Bulletin 83/20**

(84) Designated Contracting States:
**CH DE FR GB IT NL**

(56) References cited:
**FR - A - 2 352 031**
**GB - A - 1 403 797**
**US - A - 3 484 403**

(73) Proprietor: **E.I. DU PONT DE NEMOURS AND COMPANY**
**Legal Department 1007 Market Street**
**Wilmington Delaware 19898 (US)**

(72) Inventor: **Richardson, Paul Noel**
**2408 Lanside Drive**
**Wilmington, Delaware 19810 (US)**

(74) Representative: **Abitz, Walter, Dr.-Ing. et al,**
**Abitz, Morf, Gritschneder P.O. Box 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 009 757 B1

# Polyamide resins and process for preparing the same

This invention is directed to polyamide resins containing certain additives which impart nucleating characteristics to the resins.

Nucleating agents are usually employed as processing aids primarily to accelerate crystallization from a melt.

Acceleration of crystallization results in faster molding cycles, which of course means greater productivity in molding operations. Generally, nucleating agents are believed to provide sites for crystallization of molten polyamide. However, nucleating agents are also identified by their ability to increase tensile strength and stiffness of the polyamide, decrease elongation, and decrease mold shrinkage. The term "nucleating agent" as employed herein, is meant to denote those additives which increase tensile strength and decrease tensile elongation and mold shrinkage.

It is known from FR—A—2 352 031 to impart an improved impact strength to polyamides by addition of polyethylene modified with, for example, maleic acid or maleic anhydride. It is pointed out in the second paragraph on page 7 of the reference that the amount of modified polyethylene in the blend with the polyamide must be at least 10% because otherwise an improvement in the impact strength is apparently not achieved.

A deficiency of many nucleating agents is that they also significantly lower the Izod impact strength of the resin compared with that of the polyamide without nucleating agent. In contrast, the nucleating agents employed herein provide nucleating properties to polyamides but do not result in a significant lowering of Izod impact strength.

## Summary of the invention

The product of this invention is a melt compounded blend consisting essentially of

a) a polyamide resin having a molecular weight of at least 5000, and

b) an adduct of maleic or fumaric anhydride and a copolymer of ethylene, at least one $C_3$ to $C_6$ $\alpha$-olefin, and at least one nonconjugated diene, said adduct having an anhydride functionality of between 0.1 and 4.0 milliequivalents of carboxyl groups per 1 gram of adduct, said adduct being present in the blend in an amount such that the anhydride functionality comprises between 0.9 and 10 equivalents per $10^6$ g of polyamide present; provided that the maximum amount of adduct present is less than 1 percent based on weight of polyamide and adduct.

The process of this invention is a process for preparing the melt compounded blend described above by mixing the polyamide resin and the adduct and melt extruding the mixture.

## Description of the invention

The polyamide resins used in the blends of this invention are well known in the art and embrace those resins having a molecular weight of at least 5000 and commonly referred to as nylons. Suitable polyamides include those described in U.S. Patents 2,071,250; 2,071,251; 2,130,523; 2,130,948; 2,241,322; 2,312,966; 2,512,606; and 3,393,210.

Preferably, the polyamides are those made by the condensation of linear diamines represented by the formula $H_2N—(CH_2)x—NH_2$, where x is a integer between 6 and 12, with linear dicarboxylic acids represented by the formula $HO_2C—(CH_2)_y—CO_2H$, where y is an integer between 2 and 8. Equally well, these polyamides may be made from amine-forming and acid-forming derivatives of said amines and acids such as esters, acid chlorides, amine salts, etc. Representative dicarboxylic acids used to make the polyamides include adipic acid, pimelic acid, suberic acid, sebacic acid, and dodecanedioic acid, while representative diamines include hexamethylene diamine and octamethylene diamine.

Examples of polyamides include polyhexamethylene adipamide (66 nylon), polyhexamethylene azelamide (69 nylon), polyhexamethylene sebacamide (610 nylon), and polyhexamethylene dodecanoamide (612 nylon), polycaprolactam, (nylon 6), polylauryl lactam, poly-11-amino-undecanoamide, bis-(paraaminocyclohexyl) methane dodecanoamide. It is also possible to use polyamides prepared by the copolymerization of two of the above polymers or terpolymerization of the above polymers or their components, as for example, a polymer made of adipic acid, and isophthalic acid and hexamethylene diamine. Preferably the polyamides are linear with a melting point in excess of 200°C. Also included in the blends of this invention are copolymers, such as a copolymer of nylon 6,6, and polylactams, e.g., nylon 6 (polycaprolactam); and blends of polyamides, such as a mixture of nylon 6,6 and nylon 6. Preferably the condensation polyamide employed herein is polyhexamethylene adipamide (nylon 6,6).

By the term "anhydride functionality" is meant the group

$$—\overset{\overset{O}{\|}}{C}—O—\overset{\overset{O}{\|}}{C}—$$

The concentration of anhydride in the adduct is measured by infrared spectroscopy of hot pressed films.

The amount of the adduct present to achieve the nucleation effect in the blend depends on the amount of anhydride functionality present in the adduct, provided the amount of adduct present is less than 1%. The amount of anhydride functionality present in the adduct is preferably between 0.1 and 7 and most preferably between 0.1 and 2 milliequivalents per gram. Preferably also the amount of adduct present in the blend is between 0.9 and 7 equivalents of carboxyl groups per $10^6$ g of polyamide polymer. It is believed, although not conclusively demonstrated, that the anhydride function of the adduct polymer reacts with amine ends of the polyamide to provide the nucleating effect seen in the blends.

The adduct may be prepared as described in Flexman U.S. 4,026,067 or Caywood U.S. 3,884,882 and U.S. 4,010,223. It preferably has an inherent viscosity of at least one as measured on 0.1 g of adduct in 100 ml of perchloroethylene at 30°C. Propylene is preferably the $C_3$—$C_6$ $\alpha$-olefin, although it can be 1-butene, 1-pentene or 1-hexene. The nonconjugated dienes include linear aliphatic dienes of at least six carbon atoms which have one terminal double bond and one internal double bond, and cyclic dienes wherein one or both of the carbon-to-carbon double bonds are part of a carbocyclic ring. Of the linear dienes, copolymers of ethylene, propylene, and 1,4-hexadiene are especially preferred. Of the adducts, those derived from maleic acid or fumaric acid are preferred.

Class of cyclic dienes useful for adduct formation includes alkylidene bicycloalkenes, alkenyl bicycloalkenes, bicycloalkadienes, and alkenyl cycloalkenes. Representative of alkylidene bicycloalkenes are 5-alkylidene-2-norbornenes such as 5-ethylidene-2-norbornene and 5-methylene-2-norbornene. Representative of alkenyl bicycloalkenes are 5-alkenyl-2-norbornenes such as 5-(1'-propenyl)-2-norbornene, 5-(2'-butenyl)-2-norbornene, and 5-hexenyl-2-norbornene. Dicyclopendadiene and 5-ethyl-2,5-norbornadiene are illustrative of bicycloalkadienes, and vinyl cyclohexene is representative of alkenyl cycloalkenes which may be selected as the diene monomer.

Another class of copolymers include branched tetrapolymers made from ethylene, at least one $C_3$ to $C_6$ $\alpha$-monoolefin with propylene being preferred, at least one nonconjugated diene, defined above, and at least one nonconjugated diene such as 2,5-norbornadiene or 1,7-octadiene.

The adducts used in this invention can be prepared by any process which intimately mixes maleic or fumaric anhydride with the copolymer without appreciable generation of free radicals, and which concurrently or subsequently heats the mixture to a temperature at which thermal addition occurs. Selected temperatures will generally be at least 225°C to obtain adduct formation at acceptable rates and less than about 350°C to avoid any significant polymer breakdown. Preferred temperature ranges will vary with the particular polymer and can readily be determined by one skilled in the art.

Mixing of the anhydride and copolymer can be by blending molten anhydride with copolymer in an internal mixer or extruder, or by blending finely divided dry maleic anhydride with copolymer on a well-ventilated rubber mill with concurrent or subsequent heating, such as in a hot press or mold. Temperatures necessary to achieve formation of an adduct are sufficiently high to dehydrate the diacid, forming the anhydride in situ. Thus, diacid can be compounded with the copolymer instead of the anhydride when such is desired.

Preferred copolymers of ethylene, propylene, and 1,4-hexadiene are very resistant to free radical formation under high shear stress conditions and are readily mixed on conventional bulk processing equipment without gel formation. Care must be exercised, however, in selecting the mixing conditions for copolymers derived from strained ring dienes such as ethylidene norbornene. Such copolymers will readily generate free radicals when sheared at low temperatures, and are preferably mixed with the anhydride at high temperature, such as above 90°C. to avoid appreciable gel formation.

It is generally desired to form adducts containing about 0.5 to 9 percent, and preferably about 1 to 4 percent, by weight anhydride.

Unreacted anhydride is conveniently removed from the adduct by extraction with water.

To prepare the melt compounded blends of this invention, the polyamide and the adduct are simply mixed by any usual means and melt extruded through any usual polyamide extruder. This procedure is referred to herein as "melt compounding". If the adduct is in finely ground form it can be mixed directly with the polyamide. If, however, it is in coarse or pellet form, it is preferable to first mix and extrude it with the polyamide in amounts of about 10—20 percent to form a concentrate, and then mix and extrude the concentrate with additional polyamide. Werner Pfleiderer twin screw, Brabender, Banbury mill or the like are common useful extruders that can be employed to melt compound the blends of this invention. Ordinarily, the ingredients are dry blended and then extruded at a temperature above the melting point of the polyamide.

The blends of this invention may contain one or more conventional additives such as stabilizers and inhibitors of oxidative, thermal, and ultraviolet light degradation; lubricants and mold release agents, colorants including dyes and pigments, fibrous and particulate fillers and reinforcements, plasticizers, and the like. These additives are commonly added during the mixing step.

Representative oxidative and thermal stabilizers which may be present in blends of the present invention include Group I metal halides, e.g., sodium, potassium, lithium with cuprous halides, e.g., chloride, bromide, iodide; hindered phenols, hydroquinones, and varieties of substituted members of those groups and combinations thereof.

Representative ultraviolet light stabilizers, include various substituted resorcinols, salicylates, benzotriazoles, benzophenones, and the like.

Representative lubricants and mold release agents include stearic acid, stearyl alcohol, and stearamides. Representative organic dyes include nigrosine, while representative pigments, include titanium dioxide, cadmium sulfide, cadmium selenide, phthalocyanines, ultramarine blue, carbon black, and the like. Representative fillers include carbon fibers, glass fibers, amorphous silica, asbestos, calcium silicate, aluminum silicate, magnesium carbonate, kaolin, chalk, powdered quartz, mica, feldspar, and the like.

Examples

In the Examples which follow, the concentration of anhydride functionality in the adduct was measured by pressing it to form a film. The film is then subjected to infrared wavelengths in an infrared spectrometer and the maxima of anhydride is compared to a standard to determine the anhydride functionality.

Tensile strength and elongation measurements were made by ASTM D638 on 3.17 mm thick specimens pulled at 50.8 mm per minute, and Izod impact strength was determined by ASTM D256 on 3.17 mm thick specimens, except that specimens were used dry as molded.

Mold shrinkage was determined by measuring the length of five 3.17 mm thick tensile test bars and subtracting the average from the length of the mold cavity. The difference is divided by the length of the cavity to give mold shrinkage in dimensionless units of mm/mm.

The following adducts were employed:

Adduct polymer 1A

A polymer of fumaric acid grafted onto a terpolymer of ethylene and propylene and 1,4-hexadiene prepared as described in Example 4 of U.S. 4,026,967 was employed. The graft polymer was analyzed for an anhydride functionality was 0.42 meq/g acid.

Adduct polymer 1B

Another sample of polymer was prepared as described for Polymer 1A. The anhydride functionality was 0.71 meq/g acid.

In the Examples and controls, the appropriate adduct was mixed with nylon pellets or powder by tumbling in a polyethylene bag. The mixture was extruded at 270°C. in a 28 mm Werner and Pfleiderer twin screw extruder. Test on resins were run dry as molded.

Adducts 1A and 1B were obtained in pellet form, and to ensure good mixing, a two-step mixing procedure was employed. A 10 percent by weight mixture of adduct in the nylon was first obtained by tumbling and extrusion. Then this 10 percent mixture was diluted with more nylon and tumbled and extruded again to obtain blends of desired adduct concentration.

The blends prepared were molded by injection molding. A melt temperature of 285°C., a mold temperature of 90°C., and an injection melt pressure of 73.8 MPa were employed at a cycle time of 50 seconds.

Example 1

Properties of Nylon 66 containing adduct polymer 1A (EPHDE-g-F)

| Adduct Concentration Wt % | acid $Eq/10^6g$ | Tensile strength MPa | Elongation % | Izod impact strength J/m | Mold shrinkage mm/mm |
|---|---|---|---|---|---|
| None[1] | | 84 | 72 | 54 | .017 |
| .25[2] | 1.1 | 87 | 46 | 59 | .015 |
| .5[2] | 2.1 | 88 | 36 | 59 | .013 |
| .5[2,3] | 2.1 | 90 | 28 | 59 | .013 |
| None[1] | | 84 | 50 | 49 | .006 |
| .5 | 2.1 | 85 | 34 | 59 | .013 |

[1]Nylon 66 control (Zytel® 101)

[2]These also contained .3 percent N-stearyl erucamide lubricant for mold release.

[3]This also contains .7 percent Nigrosine—a black dye.

As seen from the table, the adduct increased tensile strength and Izod Impact strength and decreased elongation and mold shrinkage. (The mold shrinkage of .006 for the second nylon 66 control is considered to be an anomalous result).

Example 2

Properties of nylon 66 containing adduct polymer 1B (EPHDE-g-F)

| Adduct Concentration Wt % | Adduct Concentration acid Eq/$10^6$g | Tensile strength MPa | Elongation % | Izod impact strength J/m | Mold shrinkage mm/mm |
|---|---|---|---|---|---|
| None[1] | | 83 | 65 | 54 | .017 |
| .3 | 2.1 | 88 | 31 | 54 | .015 |
| .9 | 6.3 | 89 | 26 | 59 | .013 |

[1]Nylon 66 control (Zytel® 101)

As seen from the table, the same results are generally obtained as with Example 1.

## Claims

1. Melt compounded polyamide resins blends consisting essentially of

a) a polyamide resin having a molecular weight of at least 5000, and

b) an adduct of maleic or fumaric anhydride and a copolymer of ethylene, at least one $C_3$ to $C_6$ $\alpha$-olefin, and at least one nonconjugated diene, said adduct having an anhydride functionality of between 0.1 and 4.0 milliequivalents of carboxyl groups per 1 gram of adduct, said adduct being present in the blend in an amount such that the anhydride functionality comprises between 0.9 and 10 equivalents per $10^6$ g of polyamide present; provided that the maximum amount of adduct present is less than 1 percent based on weight of polyamide and adduct.

2. The blend of Claim 1 wherein the anhydride functionality in the adduct is between 0.1 and 2 milliequivalents per gram and the adduct is present in an amount such that the amount of carboxyl groups available for anhydride functionality comprises between 0.9 and 7 equivalents of carboxyl groups per $10^6$ g of polyamide present, provided the maximum amount of adduct present is less than 1 percent based on weight of polyamide and adduct.

3. The blend of Claim 2 wherein copolymer of the adduct is a copolymer of ethylene, propylene, and at least one linear aliphatic diene of at least 6 carbon atoms.

4. The blend of Claim 3 wherein the diene is 1,4-hexadiene.

5. The blend of Claims 3 or 4 wherein the adduct is derived from maleic acid.

6. The blend of Claims 3 or 4 wherein the adduct is derived from fumaric acid.

7. Process for preparing the blend of Claim 1 wherein components a) and b) of Claim 1 are physically mixed and then melt extruded.

## Revendications

1. Mélanges de résines polyamide réalisés par fusion constitués essentiellement de

a) une résine polyamide ayant un poids moléculaire d'au moins 5000, et

b) un produit d'addition d'anhydride maléique ou fumarique et d'un copolymère d'éthylène, d'au moins une $\alpha$-oléfine de $C_3$ à $C_6$ et d'au moins un diène nonconjugué, ce produit d'addition ayant une fonctionnalité anhydride comprise entre 0,1 et 4,0 milliéquivalents de groupes carboxyle par gramme de produit d'addition, ce produit d'addition étant présent dans le mélange en quantité telle que la fonctionnalité anhydride soit comprise entre 0,9 et 10 équivalents par $10^6$ g de polyamide présents; avec la condition que la quantité maximale de produit d'addition présente est inférieure à 1 pour cent par rapport au poids de polyamide et de produit d'addition.

2. Le mélange selon la revendication 1 dans lequel la fonctionnalité anhydride dans le produit d'addition est comprise entre 0,1 et 2 milliéquivalents par gramme et le produit d'addition est présent en quantité telle que la quantité de groupes carboxyle disponible pour la fonctionnalité anhydride soit comprise entre 0,9 et 7 équivalents de groupes carboxyle par $10^6$ g de polyamide présents, avec la condition que la quantité maximale de produit d'addition présente est inférieure à 1 pour cent par rapport au poids de polyamide et de produit d'addition.

3. Le mélange selon la revendication 2 dans lequel le copolymère du produit d'addition est un copolymère d'éthylène, de propylène et d'au moins un diène aliphatique linéaire d'au moins 6 atomes de carbone.

4. Le mélange selon la revendication 3 dans lequel le diène est du 1,4-hexadiène.

5. Le mélange selon la revendication 3 our 4 dans lequel le produit d'addition est dérivé d'acide maléique.

6. Le mélange selon la revendication 3 ou 4 dans lequel le produit d'addition est dérivé d'acide fumarique.

7. Procédé pour la préparation du mélange de la revendication 1, selon lequel les constituants a) et b) de la revendication 1 sont mélangés physiquement et ensuite extrudés à l'état fondu.

**Patentansprüche**

1. Schmelzcompoundierte Polyamidharzgemische, bestehend im wesentlichen aus

a) einem Polyamidharz mit einem Molekulargewicht von mindestens 5000, und

b) einem Addukt von Maleinsäure- oder Fumarsäureanhydrid und einem Copolymeren von Äthylen, mindestens einem $C_3$ bis $C_6$-$\alpha$-Olefin und mindestens einem nichtkonjugierten Dien, wobei das Addukt ein Anhydridfunktionalität von zwischen 0,1 und 4,0 Milliäquivalenten an Carboxylgruppen pro 1 Gramm Addukt aufweist, wobei das Addukt in dem Gemisch in einer derartigen Menge vorhanden ist, daß die Anhydridfunktionalität zwischen 0,9 und 10 Äquivalente pro $10^6$g vorhandenem Polyamid beträgt; vorausgesetzt, daß die maximale Menge an vorhandenem Addukt weniger als 1%, basierend auf dem Gewicht von Polyamid und Addukt, beträgt.

2. Gemisch nach Anspruch 1, in dem die Anhydridfunctionalität des Addukts zwischen 0,1 und 2 Milliäquivalente pro Gramm beträgt und das Addukt in einer derartigen Menge vorhanden ist, daß die Menge an für die Anhydridfunktionalität verfügbaren Carboxylgruppen zwischen 0.9 und 7 Äquivalente an Carboxylgruppen pro $10^6$g vorhandenem Polyamid beträgt, vorausgesetzt, daß die maximale Menge an vorhandenem Addukt weniger als 1%, bezogen auf das Gewicht von Polyamid und Addukt, beträgt.

3. Gemisch nach Anspruch 2, worin das Copolymere des Addukts ein Copolymeres von Äthylen, Propylen und mindestens einem linearen aliphatischen Dien mit mindestens 6 Kohlenstoffatomen ist.

4. Gemisch nach Anspruch 3, worin das Dien 1,4-Hexadien ist.

5. Gemisch nach Anspruch 3 oder 4, worin das Addukt von Maleinsäure stammt.

6. Gemisch nach Anspruch 3 oder 4, worin das Addukt von Fumarsäure stammt.

7. Verfahren zur Herstellung des Gemischs nach Anspruch 1, bei dem die Bestandteile a) und b) des Anspruchs 1 physikalisch vermischt und anschließend schmelzextrudiert werden.